# EUROPEAN PATENT APPLICATION

(11) **EP 2 911 020 A1**
(43) Date of publication of application: **26.08.2015**
(21) Application number: 14155879.1
(22) Date of filing: 20.02.2014
(51) Int. Cl.: G05B 19/042

(54) **Extending a basic control block**

(71) Applicant: ABB Technology Ltd, 8050 Zürich (CH)
(72) Inventor: Fors, Niklas, 211 50 Malmö (SE); Hedin, Görel, 224 65 Lund (SE)
(74) Representative: Savela, Reino Aleksi

(57) **Abstract**

The invention is related to a control device, process control system and computer program product for controlling a process. The device comprises processing elements (46, 48, 50) set to perform signal processing operations and interconnected standardized control blocks (38) together providing a signal processing path, where at least one input signal (SP, PV) is received and from which at least one output signal (O) is supplied to the process, where some control blocks (38) define at least one input port (IP3), at least one output port (OP2) and at least one processing element (50) and how these are to be interconnected, wherein the control blocks comprise at least one basic control block and at least one primary extension control block, where a port of an extension block (38) is connected to a processing element (48) in the path of the basic block for enhancing the functionality of the basic block.

## Description

### FIELD OF THE INVENTION

The invention relates to the field of process control systems. The invention more particularly concerns a control device, control system and computer program product for controlling a process using an output signal generated based on at least one input signal.

### BACKGROUND OF THE INVENTION

It is known to use computer programs, such as DOX 10 being marketed by ABB, for providing a control function in a control device for a process.

Such a computer program may comprise a standardised or pre-determined software block made up of or referencing a number of processing elements, such as an adding element, a subtracting element, a multiplying element, etc. The standardised software block may then be connected for controlling an industrial process.

In order to be able to be used in a variety of different control schemes, the standardised software block will then typically implement a great number of interconnected process control branches, each comprising one or more processing element, which control branches may each be used for implementing a corresponding control aspect for a desired control scheme. Many of these process control branches are then optional and the optional control branches will then have a conditional element that has to be set for the control branch to be a part of or excluded from the desired control scheme. When implementing a specific control scheme using the standardised control block, it is thus necessary to make a setting in the conditional elements of the optional process control branches so that only the branches that are actually used for performing the specific process control scheme are being run through.

This allows the implementation of a control scheme in a fast and simple way without the need of extensive programming skills.

However, the standardised block may comprise many different optional branches. In a specific control scheme implementation the number of optional branches being used may be fairly low. This means that more software code than what is necessary will be stored in the program memory of a control computer when implementing the specific control scheme. This thus leads to a waste of memory space, which in turn leads to the need for a larger and consequently more expensive memory. Alternatively, the memory space occupied by this unnecessary code could otherwise be used for better purposes. The process control scheme realized by the software block may furthermore be visually presented in a data-flow diagram. This presentation may then become complex and cloud the understanding of the actual control scheme used as it will include all the optional branches.

However, what is even more troublesome is that when the control scheme is implemented, the setting of the optional control branch has to be investigated each time the control scheme is executed. The conditional element of every optional branch has to be investigated each time the branch is passed in the control according to the control scheme. The code implementing the optional branch will also have to be run through. This has the effect that the period of the control cycle of the control scheme is prolonged just because an investigation has to be made of all the optional control branches and the code implementing these having to be run through. This puts a limitation on the speed with which the control device can act on changes in the process. There may for instance be transients in the input signals needing a quick reaction and the speed with which these transients can be handled is limited by the period of the control cycle. Speed is in many types of systems, such as electrical power transmission systems, very important, which is why the period of the control cycle may have to be as low as possible.

In view of what has been mentioned above there is a need for enabling an easily assembled control scheme using standardised control blocks which at the same time lowers the length of time of the period of control cycle.

### SUMMARY OF THE INVENTION

It is therefore an objective of the invention to enable a simple and efficient implementation of a control scheme in a compact way using standardised control blocks which at the same time lowers the period of control cycle used in the control.

This object is according to a first aspect of the invention achieved through a control device in a process control system and controlling a process using at least one output signal generated based on at least one input signal, the control device comprising:
a number of processing elements, each set to perform a corresponding signal processing operation in the control device,
a number of interconnected standardized control blocks together providing a signal processing path where at least one input signal is received and from which at least one output signal is supplied to the process, where some control blocks define at least one input port at least one output port and at least one processing element and how these are to be interconnected for performing a control function,
wherein the control blocks comprise at least one basic control block and at least one primary extension control block, where a port of a first primary extension control block is connected to a processing element in the signal processing path of the basic control block for enhancing the functionality of the basic control block.

A second aspect of the invention is directed to a process control system comprising a control device according to the first aspect.

A third aspect of the invention is directed towards a computer program product for controlling a process using at least one output signal generated based on at least one input signal, the computer program product comprising a data carrier with computer program code being loadable into one or more internal memories of one or more computer forming a process control device, said computer program code causing said one or more computers to, when being loaded in said one or more internal memory, provide
a number of processing elements, each set to perform a corresponding signal processing operation in the control device,
a number of interconnected standardized control blocks together providing a signal processing path where at least one input signal is received and from which at least one output signal is supplied to the process, where some control blocks define at least one input port, at least one output port and at least one processing element and how these are to be interconnected for performing a control function,
wherein the control blocks comprise at least one basic control block and at least one primary extension control block, where a port of a first primary extension control block is connected to a processing element in the signal processing path of the basic control block for enhancing the functionality of the basic control block.

The invention according to these aspects has a number of advantages. The invention avoids the use of software that is not needed. This leads to an efficient use of computer code in that only code necessary for implementing an actual desired control scheme is used and thereby the memory space requirements are relaxed. Furthermore during the running of a control program, only code that is relevant for the specific control scheme is run through, which has the advantage of allowing control cycles with short time periods to be implemented, which may be of interest when controlling processes that have quick state changes. This is furthermore combined with ease of assembly of the control scheme. A control scheme can be put together fast and reliably without the use of special programming skills..

### BRIEF DESCRIPTION OF THE DRAWINGS

The subject matter of the invention will be explained in more detail in the following text with reference being made to preferred exemplary embodiments which are illustrated in the attached drawings, of which:
Fig. 1 schematically shows a process control system comprising a control computer for controlling an industrial process,
Fig. 2 schematically shows a control device acting on a process value, a feed forward signal and a control value and providing an output to the process,
Fig. 3 schematically shows the process control device in the form of a processor with associated program memory comprising a number of control blocks and processing element memory,
Fig. 4 shows an exemplifying visual flow diagram of processing elements connected according to a basic control block,
Fig. 5 shows a visual flow diagram of processing elements according to a first primary extension control block connected to the processing elements of the basic control block,
Fig. 6 shows a visual flow diagram of processing elements according to a second primary extension control block connected to the processing elements of the basic control block,
Figure 7 shows a visual flow diagram example of processing elements according to the first and the second primary extension control blocks connected to the processing elements of the basic control block,
Fig. 8 shows one illustration of the principles of associating extension control blocks with a basic control block,
Fig. 9 shows another illustration of the principles of associating extension control blocks to a basic control block,
Fig. 10 illustrates the intercepting of two signal processing paths with a processing control function,
Fig. 11 schematically shows how a function may be inserted between an output and a basic function, and
Fig. 12 schematically shows a computer program product comprising computer readable code which implements the control device when loaded into a computer.

### DETAILED DESCRIPTION

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. In other instances, detailed descriptions of well known devices, circuits, and methods are omitted so as not to obscure the description of the present invention with unnecessary detail.

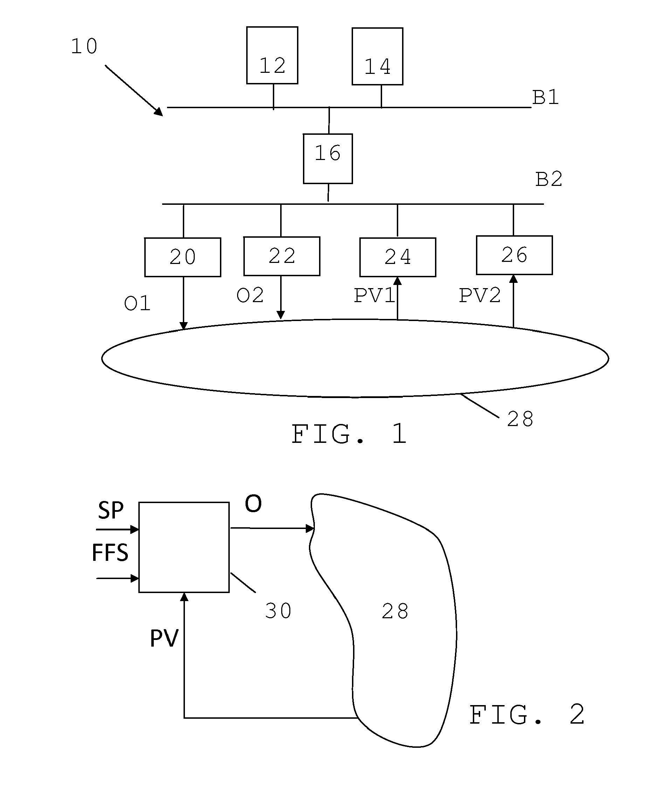

Fig. 1 schematically shows a control system 10 controlling a process 28 or a part of a process. The control system 10 is thus a process control system. The process 28 may be an industrial process and may furthermore be any of a number of different types of processes such as a pulp and paper production process, a water purification and distribution process, oil and gas production and distribution process, petrochemical, chemical, pharmaceutical and food process, an electric power transmission process or an electric power distribution process. These are just some examples of processes where the system 10 can be applied. There exist countless other processes.

In fig. 1 the process control system 10 includes a number of computers 12 and 14 connected to a first bus B1. There is here a first computer 12 that is a first operator terminal and a second computer that is an engineering terminal 14. There is furthermore a second bus B2 and between the first and second busses there is connected a control computer 16 providing control of the process 28. To the second bus B2 there are furthermore connected process interface devices 20, 22, 24 and 26 for providing control of the process 28. These devices are sometimes referred to as field devices and are also real world objects involved in the control of the process. They are thus controlled by the control computer 16. In the figure there are provided four such process interface devices 20, 22, 24 and 26 that interfaces the process 28. It should however be realized that there may be more or fewer of each of these devices. Such devices are thus all involved in controlling the process 28 and in doing this one or more may be involved in measuring physical properties related to the process. The measured properties may here be properties of the process itself such as a voltage of or current running in a power line or the pulp temperature of a pulp and paper process.

It should also be realised that there may be many more control computers as well as more engineering and operator terminals.

The control computer 16 normally has some local software for controlling one or more process interface devices, which may be different entities that influence the industrial or technical process, like such things as a pump, a motor, a valve, a tank etc. for instance realized through one or more of the process interface devices 20, 22, 24 and 26. This part of the control computer will in the following be termed a control device. The details of which will also be described later. The process may also be monitored through the first operator terminal 12, which communicates with the control computer.

In fig. 1 the first and second process interface devices are shown as providing control signals 01 and 02 to the process, while the third and fourth process interface devices are shown as receiving process values PV1 and PV2 from the process 28. A process value PV, which is a response to a control signal O, may be a measured physical property of the process.

The control device was above described as being a part of the control computer. It may just as well be provided in the form of a controller, such as a PID controller, which may be provided between the control computer and the process interface devices. The control computer may then provide a set point SP and/or a feed forward signal FFS for the controller, which in turn control the process interface devices based on such a set point and/or feed forward signal.

Fig. 2 schematically shows a control device 30. The control device 30 receives a feed forward signal FFS, a set point SP and the process variable PV and provides an output or control signal O to the process. The control device 30 seen in fig. 2 is a simplified control device performing a multiple input/single output control scheme. It should be realized that the control device may implement a number of different control schemes, such as a single input/ single output, a multiple input/multiple output or a single input/multiple output control scheme.

The control device 30 implements a control scheme which has been realized using a number of standardized control blocks. The control scheme is furthermore a cyclical control scheme. The scheme is thus to be repeatedly run through with a period corresponding to the cycle of operation.

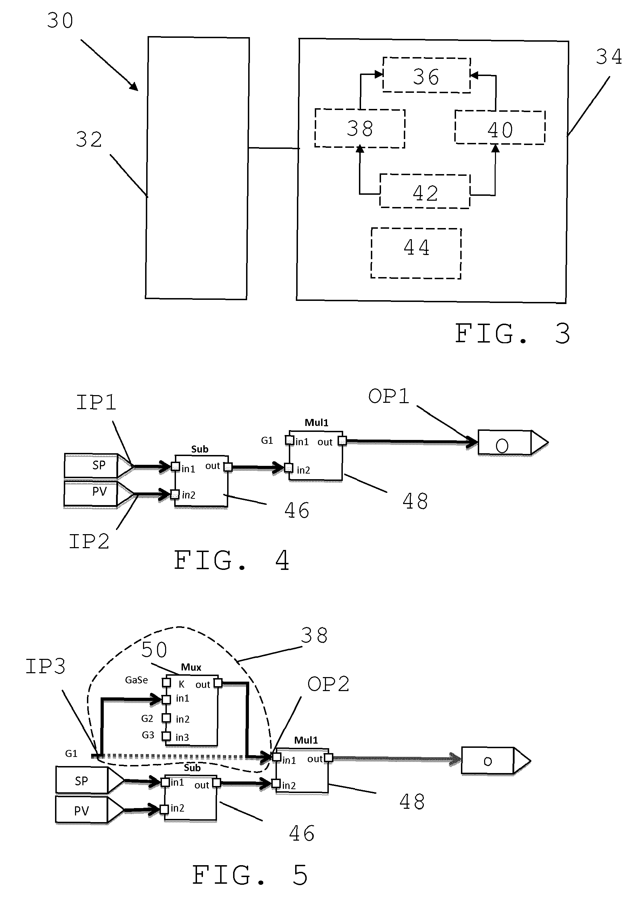

Fig. 3 schematically shows one realization of the control device 30 in the form of a processor 32 with associated program memory 34. In the program memory 34 there is a basic control block 36 connected to a first primary extension control block 38 and to a second primary extension control block 40. There is also a secondary extension control block 42 being connected to both the first and second primary extension control blocks 38 and 40. Finally there is a processing element library 44 comprising a number of different types of processing elements being employed in the control.

The control blocks have furthermore been combined in order to implement a desired process control scheme. This selection is typically performed by an engineer responsible for implementing the control in the process control system. The program memory 34 in fig. 3 indicates one such combination having been performed using a number of different interconnected standardized or pre-determined control blocks. The blocks comprise basic control blocks and primary extension control blocks, all of which define a signal processing path between at least one input port and at least one output port of the block where a corresponding control function is performed. A scheme having being implemented through a combination of control blocks is based on at least one basic control block and one or more extension control blocks that extend or enhance the control functionality of the basic control block. In order to do this the primary extension control blocks define connections being made to the path of the basic control block. However, the basic control block lacks this type of definition.

A basic control block is a block defining a basic control function and is therefore connected for receiving the at least one input signal on its at least one input port and one basic control block is connected for providing the at least one output signal to the process.

A control block may furthermore be implemented through a visual data-flow diagram type. A diagram type comprises input and output parameters, processing elements with terminals, and directed connections between terminals. In some instances it is also possible that a diagram type is treated as a processing element.

A basic control block may furthermore define the reception of one or more input signals in the signal processing path. A basic control block may also define one or more output signals delivered from the signal processing path to the process. In the example used here the same basic control block is used for defining both the input and output signals. However, it is also possible that there are two or more basic control blocks, where a first receives the input signals and a last delivers the output signal. In this example the control function implemented through the basic control block is furthermore a proportional feedback control function. For this reason the signal processing path receives a process value PV and a set point SP and provides an output signal O that is an amplified difference between the input signals PV and SP. Control of this type strives to keep the process value PV as close to the set point SP as possible. As can be seen in fig. 2 there may also be a feed forward signal FFS. This signal is a signal provided to a feed forward control function. A feed forward control function acts directly on a feed forward term without using feedback. In the example given here the feed forward control function, as will be shown later, is not implemented through a basic control block but through a primary extension control block. It should however be realized that as an alternative it is possible that the basic control block is used for implementing feed forward control, while the feedback control is implemented using one or more primary extension control blocks.

Fig. 4 shows a visual flow-diagram of an example of a basic control function provided through definitions in the basic control block 36. The basic control function is implemented through a number of interconnected processing elements, where a processing element may be a pre-defined software element performing a signal processing operation on data being input to the element. In fig. 4 there are shown two processing elements: a subtracting element Sub 46 and a first multiplying element Mul1 48, where the subtracting element 46 has a first input terminal in1 and a second input terminal in2 and an output terminal out. The subtracting element 46 subtracts data received on the second input terminal in2 from data on the first input terminal in1 and provides the result on the output terminal out. The first multiplying element 48 also has a first input terminal in1, a second input terminal in2 and an output terminal out. The first multiplying element 48 is set to multiply a signal received on the second input terminal in2 with a variable gain G1 provided on the first input terminal in1 and supply the result on the output terminal out.

There may exist a number of different processing elements in the processing element library 44, where each is implemented as software code implementing the operation of the processing element in question. This means that the subtracting element Sub 46 may be realized through software code implementing the above mentioned subtraction and the first multiplying element may be realized as software code implementing the above mentioned multiplication.

The basic control block 36 is a block that defines a process control function. In the example in fig. 4 the process control function is a proportional control function, i.e. the function of amplifying the difference between a set point SP and a process value PV with a Gain G1. The control block 36 is furthermore also provided as software code and this software code defines at least one input port and at least one output port of a control branch performing the function as well as how a number of processing elements are to be connected in the signal processing path between the input and output ports. The basic control block 36 thus has at least one input port and at least one output port and comprises a definition of how a number of processing blocks performing the control function are to be interconnected in order to contribute to the signal processing path. The number of processing elements in the path may be limited to one. The block may thus point at a processing element in the library 44. As an alternative the block may also comprise the code of the processing element

In the example in fig. 4 there are two processing elements 46 and 48. There are also two input ports IP1 and IP2 and one output port OP1, where the first input port IP1 receives an input signal in the form of the set point SP, the second input port receives a second input signal in the form of the process value PV and the output signal O is provided via the output port OP1. In order to implement the proportional control function, the basic control block specifies that the first input port IP1 is to be connected to first input terminal in1 of the subtracting element 46 and the second input port IP2 to the second input terminal in2 of the subtracting element 46, the output terminal out of which is to be connected to the second input terminal in2 of the first multiplying element 48. The first input terminal in1 of the first multiplying element 48 is also set for receiving the variable G1 and the output terminal out of the first multiplying element 48 is set to be connected to the output port OP1.

The code for implementing this block 36 may then be provided in the following way:

```
 diagramtype P(int SP, int PV => int 0){
   variable G1;
   Sub;
   Mul1;
   connect(SP, Sub.in1);
   connect(PV, Sub.in2);
   connect(G1, Mul1.in1);
   connect(Sub.out, Mul1.in2);
   connect(Mul1.out, 0);
 }
```

This code specifies that the block is of a type P, which represents proportional control, and has the input data SP and PV at the two input ports IP1 and IP2 and provides output data O on a single output port. There is also a variable G1. The code furthermore specifies that a subtracting element Sub and a multiplying element Mul1 are to be connected in the path, which elements are obtained from the processing element library 44. Then follows a specification of the way the ports and elements are to be interconnected for forming the signal processing path. The first input signal SP is to be received at the first input terminal in1 of the Subtracting element Sub, the second input signal PV is to be received at to the second input terminal in2 of the subtracting element Sub, the variable G1 is to be provided at the first input terminal in1 of the first multiplying element Mul1, the output terminal out of the first subtracting element Sub is to be connected to the second input terminal in2 of the multiplying element Mul1 and the output terminal out of the multiplying element MUl1 is to provide the output signal O at the output port OP1.

In this way the basic process control function is defined, which is a function that may be the sole function provided by the control device 30. The control scheme may thus only comprise the basic function. This means that this basic function may operate independently of other functions.

It can thus be seen that the exemplifying basic control block 36 is a block type that models a P regulator. It contains the input parameters SP (set value) and PV (process value), the output parameter O (control signal), the blocks Sub and Mul1, and connections that model the data-flow between the input ports and the output port. Connections are connected to terminals on elements or to parameters. A block can be an instantiation of another block type, to support hierarchies.

According to the principles described here, there are also standardised or pre-determined extension control blocks comprising primary extension control blocks and secondary extension control blocks. The primary extension control blocks are blocks that provide extended control functionality. These blocks may be added to the basic control block in order to provide additional control functionality in addition to the basic control functionality. Such a block may then define the connection of one or more further processing elements to a processing element of the signal processing path in the basic control block. The input or output port of the primary extension control block may then be inserted between a processing element and any port, input, output or variable port as well as between two processing elements.

Fig. 5 shows a data flow diagram of functionality that has been added to the functionality of the basic control block 36 through a first primary extension control block 38. The functionality being added is in this example the functionality of allowing a gain selection to be made in the proportional control. For this reason a third processing element 50 in the form of a multiplexer Mux having a number of input terminals and one output terminal is added. The third processing element 50 has a selector terminal K, three input terminals in1, in2 and in3 and an output terminal out. The first primary extension control block 38 defines an input port IP3 and an output port OP2, where the input port IP3 is connected for receiving the variable gain G1 of the basic control block 36 and the output port O2 is set to supply a gain, among a number of gain values. The first input terminal in1 of the processing element 50 is here connected for receiving the gain variable G1 provided in relation to the basic control block 36, while the second input terminal in2 receives a second Gain variable G2 and the third input terminal receives a third gain variable G3. The selector terminal K receives a gain selection signal GaSe, while the output terminal out is connected to the first input terminal in1 of the first multiplying element 48.

It can in this way be seen that the multiplexing element 50 is inserted between the variable G1 and the first input terminal in1 of the first multiplying element 48 defined by the basic control block 36. The role of the multiplexing element 50 is to select one of the Gain values G1, G2 or G3 for output to the first multiplying element based on a gain selecting signal GaSe.

The software code of the first primary extension control block may then be provided in the following way:

```
 diagramtype GS() extends P {
   variable GaSe;
   variable G2;
   variable G3;
   Mux;
   intercept Mul1.in1 with Mux.in1, Mux.out;
   connect(GaSe, Mux.K);
   connect(G2, Mux.in2);
   connect(G3, Mux.in3);
 }
```

The type of function is here defined as GS, which is a Gain Scheduler and extends the basic control block P. It is thus an extension of the previously described proportional control block P. It is furthermore defined as having variables GaSe, G2 and G3 as well as comprising the processing element of type Mux. As the block is a primary extension control block, the ports IP3 and OP2 are to be connected between objects defined in the basic control block, such as between processing elements or between a processing element and a port or between a processing element and a variable connection. As can be seen in fig. 5 the ports are inserted between the variable G1 of the basic control block and the first input terminal in1 of the first multiplying element 48. This is specified through the instruction "intercept Mul1.in1 with Mux.in1, Mux.out" which specifies that the multiplexer Mux is to be placed between the variable G1 and the first input terminal of the first multiplying element Mul1, where the variable is to be connected to the first input terminal of the multiplexer, the output terminal of which is to be connected to the first input terminal of the first multiplying element 48. Finally there follows a definition of where the variables GaSe, G2, and G3 are to be connected on the multiplexing element 50.

GainScheduler GS is a subtype of P and it adds a Mux block. It also intercepts the connection to the Mul.in1 port to support several gain values, i.e. G1, G2 and G3. Mul1.in1 is intercepted by the pair (Mux.in1, Mux.out), which will replace the connection (G1, Mul1.in1) with the two connections (G1, Mux.in1) and (Mux.out, Mul1.in1).

In the example above it would just as well be possible to use either the second or the third multiplexer input terminal for receiving the variable G1 instead, in which case the above mentioned code could look like

```
 diagramtype GS() extends P {
   variable GaSe;
   variable G2;
   variable G3;
   Mux;
   intercept Mul1.in1 with Mux.in2, Mux.out;
   connect(GaSe, Mux.K);
   connect(G2, Mux.in1);
   connect(G3, Mux.in3);
 }
 or
 diagramtype GS() extends P {
   variable GaSe;
   variable G2;
   variable G3;
   Mux;
   intercept Mul1.in1 with Mux.in3, Mux.out;
   connect(GaSe, Mux.K);
   connect(G2, Mux.in2);
   connect(G3, Mux.in1);
 }
```

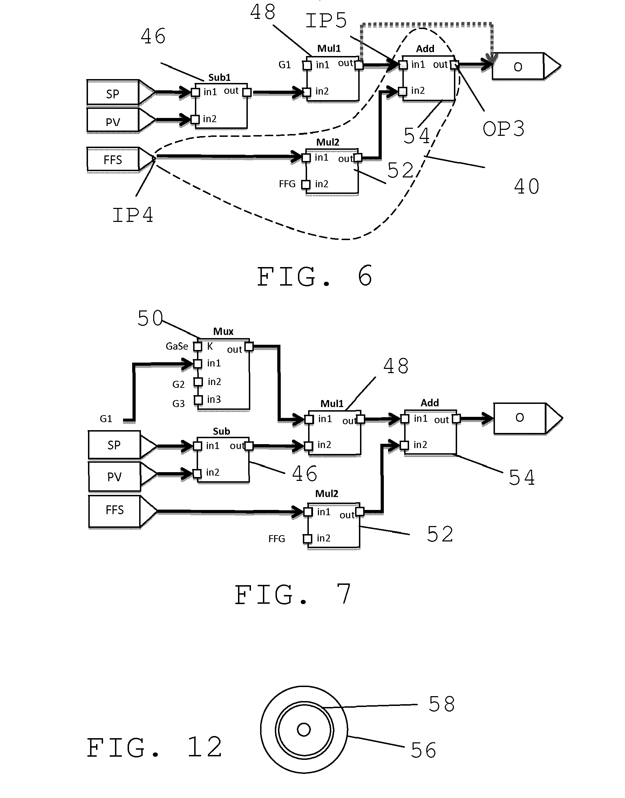

Fig. 6 shows a data-flow diagram of another example of a function that may be added to the basic proportional control function P. The added function is here a feed forward control function that is inserted between the output terminal out of the first multiplying element 48 and the output port OP1 of the basic control block 36. The added function, which is defined by the second primary extension control block 40, is implemented using a second multiplying element Mul2 52 and an adding element Add 54. The second multiplying element Mul2 52 has a first input terminal in1, a second input terminal in2 and an output terminal out. Also the adding element Add 54 has a first input terminal in1, a second input terminal in2 and an output terminal out. The first input terminal in1 of the second multiplying element 52 is connected to an input port IP4 of the second primary extension control block 40 via which it receives an input signal FFS, while an input variable FFG is received on the second input terminal in2. The output terminal out of the second multiplying element 52 is connected to the second input terminal in2 of the adding element Add 54, the first input terminal in1 of which is connected to the output terminal of the first multiplying element 48 defined by the basic control block 36. This first input terminal in1 of the adding element 54 also forms a further input port IP5 of the second primary extension control block 40. The output terminal out of the adding element 54 in turn forms the output port OP3 of the second primary extension control block 40, which output port OP3 is thereby connected to or coincides with the output port OP1 of the basic control block 36 from which the output O is provided.

It can be seen that the functionality of the second primary extension control block 40 is inserted between the output terminal out of the first multiplying element 48 and the output port OP1 of the basic control block 36.

An example of how the code of the second primary extension control block may look like is the following:

```
 diagramtype FF(int FFS) extends P {
   variable FFG;
   Mul2;
   Add;
   intercept 0 with Add.in1, Add.out;
   connect(FFS, Mul2.in1);
   connect(FFG, Mul2.in2);
   connect(Mul2.out, Add.in2);
 }
```

The block type is here defined as being of a type FF that receives input signal FFS of the integer type. The type FF indicates that the control function being implemented is a feed forward function. In the same manner the signal FFS is a Feed Forward signal. The block is furthermore defined as being an extension of the basic control block P having a variable FFG, which is a feed forward gain variable. It is also defined as comprising the processing elements Mul2 and Add. The point where two of the ports IP5 and OP3 of the second primary extension control block 40 are to be inserted is also defined by the instruction "intercept O with Add.in1, Add.out". This instruction clearly indicates that the connection to the output port OP1 (where the output signal O is provided) of the basic control block 36 is to be intercepted by the first input terminal in1 and output terminal out of the adding element 54. Thereby this first terminal in1 will be connected to the output terminal of the first multiplying element 48 and the output terminal out of the adding element 54 will be connected to the output port OP1 of the basic control block where the output signal O is provided. Furthermore, the software block 40 also defines the connections in relation to the processing elements. It can be seen that an input signal FFS, i.e. a feed forward control signal, is to be supplied to the first input terminal in1 of the second multiplying element Mul2 52 or input port IP4 and that a variable FFG, i.e. a feed forward gain value is to be supplied to the second input terminal in2 of the second multiplying element Mul2 52. The output terminal out of the second multiplying element 52, where the feed forward signal FFS multiplied with the gain FFG is supplied, is to be connected to the second input terminal in2 of the adding element 54, which then provides the sum of the amplified feed forward signal and the amplified difference signal to the output port OP1 as the output signal O.

The relationship between the second primary extension process control block 40 and the basic process control block 36 can also be described in the following way. The block type FF inherits from the basic block P. It intercepts the connection to the output port OP1 and adds the input parameter FFS.

These are just two examples of additional control functions that may be added to a basic control function implemented through a basic control block 36 using primary extension control blocks. An example of another control function is the addition of an integrating function. It is also possible to add a derivation function. An integrating function may for instance be implemented through adding an integrating element between the output of the subtracting element and the output of the first multiplying element.

It is furthermore possible that a basic process control block defines a feed forward function to which an additional feedback control function is added using a primary extension control block.

The above mentioned types of extension control blocks were both blocks defining further functionality extending the basic functionality of the basic control block. It should be realized that a primary extension control block may also be an extension control block defining a further function that is to be added to the function of another primary extension control block, for instance a function that is to be inserted in the signal processing path of the second primary extension control block. An extension control block may also be a block that does not in itself define any new control function that is to be combined with other control functions, but instead a block that defines a number of other extension control blocks that are to be combined with the basic control block. It is as an example instance possible to combine both the feed forward and gain control functions with the basic proportional control function using the different type of extension control block. This is shown in a data-flow diagram in fig. 7.

In this case it is possible to provide a secondary extension control block that defines the simultaneous use or joint provision of the first and second primary extension control blocks through making reference to both these primary extension control blocks. The secondary extension control block 42 is such a secondary extension control block. The software code for performing this may look in the following way:

```
 diagramtype P_GS_FF() extends GS, FF {
 }
```

The block is specified as an extension control block of the type P_GS_FF which is an extension of the control blocks GS and FF. As the elements shown in fig. 7 have all been defined in the control blocks P, GS and FF and the control blocks GS and FF already references the control block P, it is sufficient to make reference to only the control blocks GS and FF. Here it should also be mentioned that the order in which the primary extension control blocks are mentioned in this secondary control block may be relevant for the order in which the processing elements they define are being inserted in the signal processing path of the basic control block.

This block type inherits from two block types: GS and FF.

The example given above was a simple example of how the principle of interception can be used to manage variability for a regulator. The base model, the block type P, models a P-regulator. P is then extended by two separated block types that support gain scheduling and feed-forward, respectively. The block type P_GS_FF is finally a P-regulator that supports both gain scheduling and feed-forward, and thus extends both GS and FF (multiple inheritance).

The inheritance can also be described in a different way. When a block type S inherits from another block type T, it is possible to say that S is a subtype of T and that T is a supertype of S. This relationship is transitive. For example, P is a supertype of P_GS_FF and P_GS_FF is a subtype of P.

The secondary extension control block does thus not itself comprise any functions to be added to another control block, such as a basic control block or a primary extension control block, but rather determines a number of primary extension control blocks that are to be used in extending the functionality of the basic control block as well as the order in which this enhancing should be made.

In some instances there may exist a tertiary extension control block. This is a hybrid between the primary and secondary extension control blocks. It thus refers to primary extension control blocks that are to be combined as well as adds functions of its own.

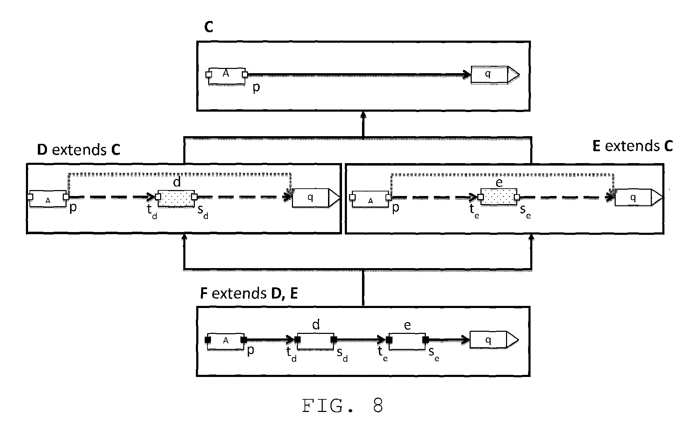

The way extending may be made can be described in more general terms with reference being made to fig. 8.

A control block may declare a set of input and output ports (also called parameters), a set of processing elements with input and output terminals, and a set of connections between ports and elements. In analogy to object-oriented programming, an extension control block D can extend another control block C, declaring more features, in this case ports, elements, element terminals and connections. It is, as was mentioned earlier, possible to say that D is a subtype of C, and C is a supertype of D , where subtyping and supertyping is transitive. A block of type T will contain instances of all the declarations of T and instances of all the declarations of all its supertypes (transitively).

Imagine that there is a basic control block C providing a basic process control function A which has a terminal p connected to an output port q. It may then be possible to extend the basic process control function with a first further function d having an input port t_{d} and an output port s_{d}. It may also be possible to extend the basic function with a second further function e having an input port tₑ and an output port sₑ. Both these functions may then be added. A first primary extension control block D may then define the addition of the first further function d through specifying that that output port q is to be intercepted with the pair (t_{d}, s_{d}), i.e. that the connection between the output terminal p of the function A is to be intercepted by the input and output ports t_{d} and s_{d} of the first further function d. In the same manner a second primary extension control block E may define the addition of the second further function e through specifying that that output port q is to be intercepted by the pair (tₑ, sₑ), where tₑ and sₑ are ports declared in C and/or E. This means that the connection between the output terminal p of the function A is to be the intercepted by the input and output ports t_{d} and s_{d} of the first further function d. For a block of type E the connection (p ,q) will in this case be replaced by the connections (p, tₑ) and (sₑ, q).

In order to extend the basic function A with both the first and second further functions d and e, it is also possible to provide a secondary extension control block F which refers to or extends both the first and second primary extension control blocks D and E. The order in which the blocks are referred to will then be the order in which the corresponding functions are inserted between the function A and the output port q. The inheritance order of D and E in F may thereby determine the interception results in F.

This can be further described in the following way. Consider a situation with diamond inheritance, i.e., where the type F is a secondary extension block extending the blocks D and E , where D and E are both primary extension blocks extending the basic block C. If both D and E intercept the same connection in C, then the order in which D and E are inherited in F decides the resulting interception.

Without loss of generality, suppose the following:
- the intercepted connection in C is (p , q)
- the inheritance order in F is D, E
- D intercepts q with ports (t_{d}, s_{d})
- E intercepts q with ports (tₑ, sₑ)

In this case, the two interceptions will result in a diagram instance where the connection (p ,q) is replaced by the connections (p, t_{d}), (s_{d} ,tₑ) and (sₑ, q).

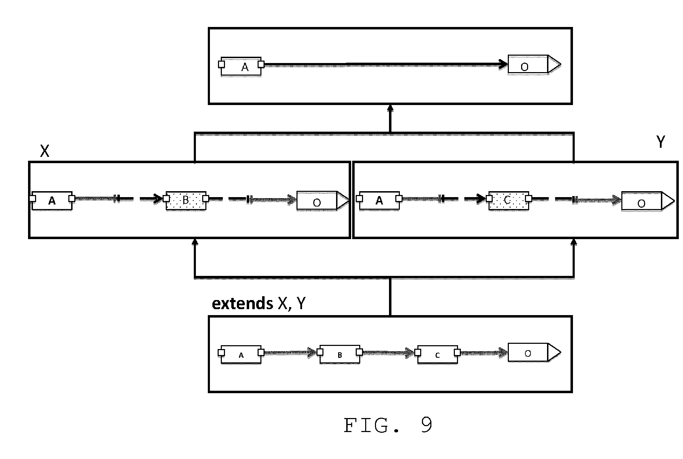

Another way in which the same thing may be visualized is shown in fig. 9. There is here a basic control block defining a basic function A connected to an output port for supplying an output signal. A first primary extension control block X may then intercept the connection between the basic function A and the output port with output signal O with a first further function B. In a similar manner a second primary extension control block Y may intercept the connection between the basic function A and the output port with output signal O with a second further function C. A secondary extension control block may then extend the primary extension control blocks X and Y so that both functions B and C are inserted between the function A and the output port with output signal O.

It is not only possible to intercept a connection of a control block by a function. It is also possible to inject a constant in the signal path.

A control block X, which is a basic or primary extension control block, may as an example provide an output 10 to an output port where an output signal O is provided. It is then possible to provide an extension control block Y that intercepts the connection between the output 10 and the output port with the output signal O with a constant, which is here exemplified by the constant 20. The software code for implementing the extension control block Y may then look like:

```
 diagramtype Y() extends X {
   intercept 0 with 20;
 }
```

It is possible with only two parameters to intercept when the source value, 10 in the example above, is a constant or variable.

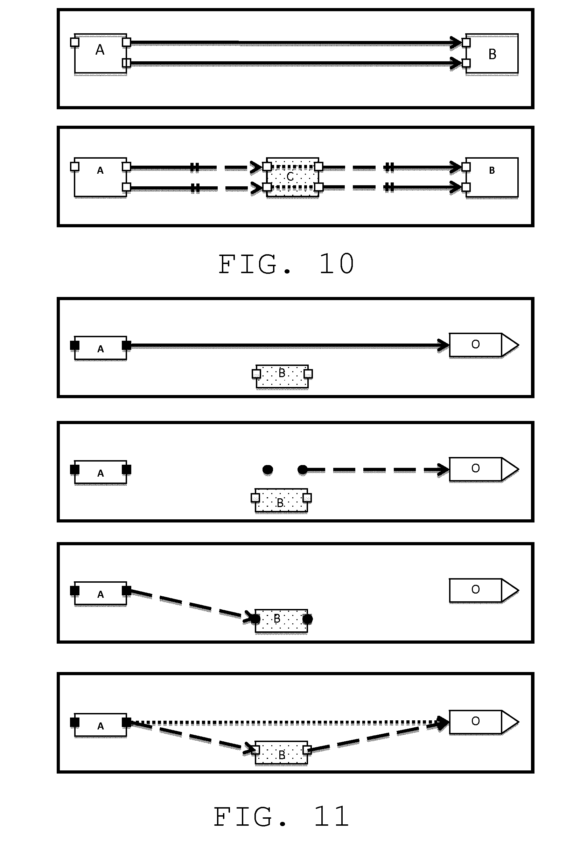

In the examples above there was a single connection being intercepted. It is also possible to intercept two connections. An example of this is shown in fig. 10. There is here a control block providing a first function A having two output terminals connected to a second function B having two input terminals. It is possible to provide a primary extension control block that inserts a function C intercepting both connections. If a control scheme designer selects one of the connections where the additional function C is to be inserted, it is possible to visually highlight the related connection.

Fig. 11 schematically shows a number of other views of how it is possible to insert an additional function B in the connection between a basic function A and the output port with the output signal O.

Through the use of the extension control blocks, it is possible to build a control scheme of a specific system using standardised basic and extension control blocks. Through interconnecting a carefully selected group of blocks, it is then possible to obtain a control device that is built up of and uses blocks that are all relevant for the specific control.

There may for instance be provided a library of control blocks or diagram types, supporting variability within a given application domain, i.e., to make it easy to describe several different variants of the same kind of control system. An example could be to describe different variants of a regulator, with and without a gain scheduler, with and without feed forward, etc.

A control function designer desiring to implement a control scheme that provides proportional feedback control with the ability to select three different gain values combined with feed forward control may then look in this library and select appropriate blocks that realize that desired control scheme. In this case the designer selects the first mentioned basic process control block, the first-mentioned first and second primary extension control blocks and the first mentioned secondary extension control block. He or she then sets the gain values G1, G2, G3 and FFG and thereby the control scheme is realized. When these blocks are stored, compiled and run in the control device, the desired control scheme is implemented in a simple way and without any unnecessary functionality such as integrating and derivative feedback control. Only the above mentioned selected blocks containing the desired scheme are then used. All the processing elements of the blocks are thus used. In other words all processing elements defined by the interconnected control blocks are set or configured to contribute to the provision of the output signal. Furthermore the scheme is operated cyclically.

It is thus possible to avoid use of software that is not needed. This leads to an efficient use of computer code in that only code necessary for implementing the actual scheme is used and thereby the memory space requirements are relaxed. Furthermore during the running of the control program, only code that is relevant for the specific control scheme is run through, which has the advantage of allowing control cycles with short periods to be implemented, which may be of interest when controlling processes that have quick state changes. This is furthermore combined with ease of assembly of a control scheme. A control scheme can be put together fast and reliably without the use of special programming skills.

The invention introduces control blocks for data-flow based control systems, namely multiple inheritance control blocks, and an interception mechanism, that allows an extension control block to replace a connection in another control block by more detailed behaviour. For simple input ports, i.e. ports accepting only one incoming connection, the intercepted connection may be identified using its target port only. However, if there are more complex input ports where there are more incoming connections, also the source port may have to be specified. This allows several extension blocks to be composed using multiple inheritance, and a well-defined resulting diagram to be computed automatically.

As was mentioned earlier the control device may be provided in the form of a processor acting on computer program code in a program memory. This computer program code may also be provided on a data carrier which performs the functionality of the control device when being loaded into such a program memory. Fig. 12 schematically shows one such data carrier 56, in the form of a CD-ROM disc, which data carrier carries computer program code 58 for performing the activities of the control device.

## Claims

1. A control device (30) in a process control system (10) and controlling a process (28) using at least one output signal (O) generated based on at least one input signal (SP, PV, FFS), the control device (30) comprising:
a number of processing elements (46, 48, 50, 52, 54), each set to perform a corresponding signal processing operation in the control device,
a number of interconnected standardized control blocks (36, 38, 40, 42; C, D, E, F; X, Y) together providing a signal processing path where at least one input signal (SP, PV, FFS) is received and from which at least one output signal (O) is supplied to the process, where some control blocks (36, 38, 40; C, D, E; X, Y) define at least one input port (IP1, IP2, IP3, IP4, IP5), at least one output port (OP1, OP2, OP3) and at least one processing element (46, 48, 50, 52, 54) and how these are to be interconnected for performing a control function,
wherein the control blocks comprise at least one basic control block (36; C) and at least one primary extension control block (38, 40; D, E; X, Y), where a port of a first primary extension control block (40) is connected to a processing element (48) in the signal processing path of the basic control block (36) for enhancing the functionality of the basic control block.

2. The control device according to claim 1, wherein all processing elements defined by the interconnected control blocks are set to contribute to the provision of the output signal.

3. The control device according to claim 1 or 2, wherein there is a second primary extension control block (40; E).

4. The control device according to claim 3, wherein a port (IP5) of the second primary extension control block is connected to a processing element (48) of the basic control block.

5. The control device according to claim 4, further comprising a secondary extension control block (42; F) defining the joint provision of the first and second extension control blocks (38, 40; D, E).

6. The control device according to claim 3, wherein a port of the second primary extension control block is connected to a processing element of the first primary extension control block.

7. The control device according to any previous claim, wherein one basic control block (36) is connected for receiving the at least one input signal (SP, PV) on its at least one input port (IP1, IP2) and one basic control block (36) is connected with its at least one output port (OP1) for providing the at least one output signal (O) to the process.

8. The control device according to claim 7, wherein the same basic control block (36) is connected for receiving the at least one input signal and provide the at least one output signal.

9. The control device according to claim 7, wherein one basic control block is connected for receiving the at least one input signal and another basic control block is connected for providing the at least one output signal.

10. The control device (30) according to any previous claim, wherein the interconnected control blocks together providing a signal processing path are set to operate cyclically.

11. The control device according to any previous claim, wherein at least one control block defines a control function (P) performing feedback control of the process.

12. The control device according to claim 11, wherein the at least one control block defining a feedback control function comprises the basic control block (36).

13. The control device according to any previous claims, wherein at least one control block defines a control function (FF) performing feed forward control of the process.

14. The control device according to claim 13, wherein the at least one control block defining a feedback control function is a primary extension control block (40).

15. A process control system (10) controlling a process (28) comprising a control device (30) according to any previous claim.

16. A computer program product for controlling a process (28) using at least one output signal (O) generated based on at least one input signal (SP, PV, FFS), the computer program product comprising a data carrier (56) with computer program code (58) being loadable into one or more internal memories of one or more computer forming a process control device, said computer program code causing said one or more computers, when being loaded in said one or more internal memory, to provide a number of processing elements(46, 48, 50, 52, 54), each set to perform a corresponding signal processing operation in the control device,
a number of interconnected standardized control blocks (36, 38, 40, 42; C, D, E, F; X, Y) together providing a signal processing path where at least one input signal (SP, PV, FFS) is received and from which at least one output signal (O) is supplied to the process, where some control blocks (36, 38, 40; C, D, E; X, Y) define at least one input port (IP1, IP2, IP3, IP4, IP5), at least one output port (OP1, OP2, OP3) and at least one processing element (46, 48, 50, 52, 54) and how these are to be interconnected for performing a control function,
wherein the control blocks comprise at least one basic control block (36; C) and at least one primary extension control block (38, 40; D, E; X, Y), where a port of a first primary extension control block (40) is connected to a processing element (48) in the signal processing path of the basic control block (36) for enhancing the functionality of the basic control block.
